# EUROPÄISCHE PATENTSCHRIFT

(11) **EP 0 770 508 B1**
(45) Veröffentlichungstag und Bekanntmachung des Hinweises auf die Patenterteilung: **02.07.2003**
(21) Anmeldenummer: 96116620.4
(22) Anmeldetag: 17.10.1996
(51) Int. Cl.: B60H 1/00

(54) **Klimaanlage für ein Kraftfahrzeug**
Motor vehicle air conditioning
Climatisation pour un véhicule à moteur

(30) Priorität: 28.10.1995 DE 19540286
(43) Veröffentlichungstag der Anmeldung: 02.05.1997
(73) Patentinhaber: Behr GmbH & Co., 70469 Stuttgart (DE)
(72) Erfinder: Bendell, Ian, 71297 Mönsheim (DE)
(74) Vertreter: Riedel, Peter, Dipl.-Ing.

(56) Entgegenhaltungen:
- DE-A- 2 423 188
- DE-A- 3 016 679
- DE-A- 3 526 518
- DE-A- 4 119 474
- FR-A- 2 057 424
- SCHWEIZER G ET AL: "ENTWICKLUNGSKONZEPT EINER EURO-KLIMAANLAGE" ATZ AUTOMOBILTECHNISCHE ZEITSCHRIFT, Bd. 93, Nr. 10, 1. Oktober 1991, Seiten 614-616, 618 - 619, XP000243777

## Beschreibung

Die Erfindung betrifft eine Klimaanlage für ein Kraftfahrzeug der im Oberbegriff des Anspruchs 1 angegebenen Gattung.

In der DE 30 16 679 A1 ist eine Klimaanlage für ein Kraftfahrzeug beschrieben, bei der in einem Gehäuse ein Gebläse, ein Verdampfer und ein Heizungswärmetauscher angeordnet sind Auf der Druckseite des Gebläses schließt sich zunächst der Verdampfer an, der mit einem Bypass versehen ist, wobei der den Verdampfer beaufschlagende Luftstrom mittels einer Steuerklappe bestimmbar ist. An den Verdampfer schließt sich in Luftströmungsrichtung ein Luftkanal an, der direkt zu Ausgangsstutzen führt, an die Luftkanäle zu verschiedenen Ausströmdüsen im Innenraum des Kraftfahrzeugs angeschlossen sind. Parallel zu dem direkt auf die Ausgangsstutzen gerichteten Luftkanal befindet sich ein Heizungswärmetauscher mit einem Bypass und Luftstromsteuerelementen, durch die die Anteile der zu erwärmenden Luft und des durch den Bypass geleiteten Luftstromes bestimmbar sind.

Die bekannte Klimaanlage bietet eine Fülle verschiedener Einstellmöglichkeiten und ermöglicht außerdem die unmittelbare Zuleitung von Frischluft an die Ausgangsstutzen des Gehäuses, so daß der Luftstrom lediglich bei einem Kühlungsbedarf durch den Verdampfer geführt wird. Aufgrund der räumlichen Lage *des* Verdampfers und des Heizungswärmetauschers sowie der Bypässe und Luftkanäle mit den diversen Luftstromsteuerelementen ist insbesondere im Heizungsbetrieb eine häufige Strömungsumlenkung erforderlich, die zu Leistungsverlusten führt. Daher sind das Gebläse und die Wärmetauscher entsprechend leistungsstärker auszulegen. Außerdem benötigt die bekannte Klimaanlage einen erheblichen Bauraum, der bei Kleinwagen und Fahrzeugen der unteren Mittelklasse nicht zur Verfügung steht.

Die DE 35 26 518 C2 beschreibt eine Klimaanlage für ein Kraftfahrzeug, wobei in einem ersten Gehäuse ein Radialgebläse und in einem zweiten Gehäuse ein Verdampfer, ein Heizungswärmetauscher und mehrere Klappen zur Luftstromsteuerung angeordnet sind. Die bekannte Anordnung ist bezüglich ihrer Ausgangsstutzen an dem zweiten Gehäuse platzsparend ausgebildet, die Luftführung innerhalb des Gehäuses ist jedoch insbesondere bei Durchströmen beider Wärmetauscher erheblichen Richtungsänderungen unterworfen, was letztendlich zu Lasten der Leistung geht. Für eine derartige Anlage wird auch ein entsprechender Bauraum unterhalb der Motorhaube benötigt, ein solcher Bauraum steht jedoch bei vielen Kleinwagen und Fahrzeugen der unteren Mittelklasse nicht zur Verfügung.

Der vorliegenden Erfindung liegt die Aufgabe zugrunde, eine Klimaanlage für ein Kraftfahrzeug der im Oberbegriff des Anspruchs 1 angegebenen Gattung zu schaffen, bei welcher der benötigte Bauraum möglichst gering und die Luftströmung möglichst wenig Richtungsänderungen unterworfen ist.

Diese Aufgabe wird durch eine Klimaanlage für ein Kraftfahrzeug mit den Merkmalen des Anspruchs 1 gelöst.

Die wesentlichen Vorteile der Erfindung sind darin zu sehen, daß durch die dicht hintereinander angeordneten und eine V-Form bildenden Wärmetauscher und der Lage des Gebläses auf der den Fußpunkt der V-Form bildenden Seite der Wärmetauscher eine äußerst kompakte Ausführung erreicht ist und die Luftführung nur geringen Richtungänderungen unterworfen ist.

Gemäß einer bevorzugten Ausgestaltung der Erfindung weist der Verdampfer eine vom Luftstrom beaufschlagte Stirnfläche auf, die bezogen auf die Richtung des aus der Gebläsespirale austretenden Luftstroms unter einem Winkel von ca. 15° bis 20° verläuft. Durch diese Lage des Verdampfers wird bei einer ebenen Kontur des Gehäuses im Anschluß an die Gebläsespirale ein sich allmählich verjüngender Luftkanal zwischen der Gehäusewandung und dem Verdampfer gebildet. Der Heizungswärmetauscher weist eine Stirnfläche auf, die zu der Stirnfläche des Verdampfers in einem Winkel von ca. 20° bis 30°, vorzugsweise 23° verläuft. Durch diesen Winkel der Stirnflächen der beiden Wärmetauscher zueinander wird in Richtung auf das offene Ende der V-Form ein ausreichend großer Raum gebildet, in dem die aus dem Verdampfer austretende Luft je nach Heizungsbedarf auf einen durch den Heizkörper geführten Luftstrom und einen durch den Bypass geführten Luftstrom aufgeteilt werden kann. Dabei entspricht das Außenmaß der beiden Wärmetauscher am offenen Ende der V-Form etwa dem Durchmesser der Gebläsespirale, welchen diese orthogonal zur Ausströmrichtung aufweist.

Eine bevorzugte Weiterbildung des Erfindungsgegenstandes besteht darin, daß auf der dem Gebläse entlegenen Seite des Heizungswärmetauschers ein mittels einer Luftstromsteuerklappe verschließbarer Bypasskanal gebildet ist. Durch diese Lage des Bypasskanals wird erreicht, daß der Weg für die kalte Luft etwas größer ist als der Weg des durch den Heizungswärmetauscher geleiteten Luftstroms, der sogenannten Warmluft. Dies hat den Vorteil, daß der Strömungswiderstand des Heizungswärmetauschers zumindest teilweise durch den geringeren Strömungsweg der Warm luft kompensiert wird.

In besonders bevorzugter Ausgestaltung ist in dem Gehäuse ein Innengehäuse vorgesehen, das mit mindestens einer Lufteintrittsöffnung und mindestens einer Luftaustrittsöffnung versehen ist. In diesem Innengehäuse ist der Heizungswärmetauscher angeordnet, wodurch sich, abgesehen von den Lufteintritts- und Luftaustrittsöffnungen, eine Kapselung des Heizungswärmetauschers ergibt. Dadurch wird erreicht, daß die durch den Bypasskanal strömende Kaltluft nicht ungewollt durch die Wärmestrahlung des Heizungswärmetauschers aufgeheizt wird. Das Innengehäuse verläuft mit einem Wandungsabschnitt zwischen den Enden, an denen der Verdampfer und der Heizungswärmetauscher aneinanderliegen, wobei diese Enden jedoch lediglich durch die Materialstärke des Innengehäuses voneinander distanziert sind.

Als besonders zweckmäßig wird angesehen, daß der Bypasskanal zwischen der Innenwandung des Gehäuses und der Außenwandung des Innengehäuses gebildet ist und zumindest ein Abschnitt des Bypasskanals annähernd parallel zur Stirnseite des Wärmetauschers verläuft. Auf diese Weise bilden die Wandungen der Gehäuseteile gleichzeitig den Bypasskanal und durch den parallel zur Stirnfläche verlaufenden Abschnitt ergibt sich eine schmale Bauweise des Gehäuses. Da der Bypasskanal an der dem Gebläse entlegenen Seite des Heizungswärmetauschers vorbeigeführt ist, befindet sich vor dem parallel verlaufenden Abschnitt des Bypasskanals ein Bogen von etwa 90°. Durch die parallel verlaufenden Wandteile des Gehäuses und des Innengehäuses ist der Querschnitt des Bypasskanals über seine gesamte Länge annähernd konstant. Besonders zweckmäßig ist es, die Luftstromsteuerklappe in dem Bogen des Bypasskanals anzuordnen, wobei der Klappenkörper um seine Schwenkachse gewölbt ausgebildet ist. Auf diese Weise befindet sich die Luftstromsteuerklappe in geöffnetem Zustand in einer Stellung, die der gebogenen Kontur des Gehäuses bzw. des Innengehäuses entspricht, so daß die Luftströmung durch den Bogen des Bypasskanals günstig beeinflußt wird. Zur Steuerung des Luftstromanteils der Warmluft wird die durch den Heizungswärmetauscher geleitete Luft vorzugsweise mittels einer im Bereich der Lufteintrittsöffnung schwenkbar gelagerten Luftstromsteuerklappe eingestellt.

Das Gehäuse wird in bevorzugter Ausgestaltung aus zwei Gehäuseteilen gebildet, die an einer mittleren Fuge aneinanderliegen und zwischen denen das Radialgebläserad, der Verdampfer und Heizungswärmetauscher angeordnet sind. Damit keine Fuge im Bodenbereich vorhanden ist, durch die möglicherweise am Verdampfer abgeschiedenes und auf den Boden des Gehäuses tropfendes Kondenswasser aus dem Gehäuse entweicht, ist es vorteilhaft, daß der Bodenbereich des Gehäuses durch eine sich unterhalb des Verdampfers erstreckende Gehäuseschale gebildet wird. In dieser Gehäuseschale sammelt sich das im Verdampfer ausgeschiedene Kondenswasser und wird beispielsweise durch einen Ablaufstutzen abgeleitet.

Zur weiteren Reduzierung des benötigten Bauraums ist es außerdem vorteilhaft, einen Abschnitt der Gebläsespirale zwischen Anschlußrohren des Heizungswärmetauschers anzuordnen. Dabei ist es besonders zweckmäßig, daß der Heizungswärmetauscher an seiner in unmittelbarer Nähe der Gebläsespirale liegenden Seite einen Wasserkasten aufweist, der mit seitlich des Abschnitts der Gebläsespirale befindlichen Aufnahmestutzen für die Anschlußrohre versehen ist. Auf diese Weise können die sich aufgrund der Konfiguration des Spiralgehäuses ergebenden Freiräume für die Anordnung von Anschlußrohren bzw. Aufnahmestutzen genutzt werden. ebenso können in diesem Bereich zu Ausgangsstutzen führende Luftkanäle des Gehäuses angeordnet sein.

Die Luftkanäle erstrecken sich vorzugsweise mindestens annähernd in derselben Richtung wie der parallel zum Heizungswärmetauscher verlaufende Abschnitt des Bypasskanals. Auf diese Weise ergibt sich eine bevorzugte Luftströmung ohne Richtungsänderung zu den Luftkanälen, so daß keine Umlenk- oder Leitmittel vorgesehen werden müssen. Damit diese bevorzugte Luftströmung für die Scheiben-Defrostung nutzbar ist, was im Hinblick auf die Verkehrssicherheit von Bedeutung ist, sollten die Ausgangsstutzen zu den Luftkanälen für die Defrostung der Windschutzscheibe vorgesehen sein.

Die Lufteintrittsöffnung ist zweckmäßigerweise in einem dem Gebläse entfernt liegenden Bereich des Innengehäuses und die Luftaustrittsöffnung - bezogen auf die Durchströmungsrichtung der Luft durch den Heizungswärmetauscher - diagonal versetzt zur Lufteintrittsöffnung angeordnet. Durch diese diagonal versetzte Anordnung von Lufteintritts- und Luftaustrittsöffnung wird eine Beaufschlagung der Stirnfläche des Heizungswärmetauschers im Sinne eines gleichmäßigen Temperaturprofils erreicht, obwohl die Querschnitte der Lufteintritts- und Luftaustrittsöffnung wesentlich geringer sind als die Stirnfläche des Wärmetauschernetzes.

Damit die durch den Bypass strömende Luft bei abgesperrter Lufteintrittsöffnung des Innengehäuses gehindert ist, durch die Luftaustrittsöffnung in das Innengehäuse einzutreten und Wärmeenergie von dem Heizungswärmetauscher aufzunehmen, sind in der Luftaustrittsöffnung Leitelemente vorgesehen, die mindestens annähernd quer zur Richtung des benachbarten Abschnitts des Bypasskanals verlaufen. Diese Leitelemente haben darüber hinaus die Wirkung, daß bei geöffneter Lufteintrittsöffnung des Innengehäuses die Warmluft an der Luftaustrittsöffnung im wesentlichen quer zur Luftströmungsrichtung der im Bypasskanal geführten Kaltluft austritt. Auf diese Weise ergibt sich eine teilweise Vermischung von Warm- und Kaltluft sowie teilweise ein Abdrängen der Warmluft in Richtung auf die Ausgangsstutzen, welche mit den Ausströmern für den Fußraum oder die Scheiben-Defrostung verbunden sind.

Mit zunehmendem Heizungsbedarf ist der Anteil der den Heizungswärmetauscher durchströmenden Luft zu vergrößern und dementsprechend der Anteil der durch den Bypasskanal strömenden Kaltluft zu verringern. Damit auf einfache Weise eine entsprechende Abhängigkeit bei der Beeinflussung der Luftströme erfolgt, ist es vorteilhaft, daß die Luftstromsteuerklappe in der Lufteintrittsöffnung und die Luftstromsteuerklappe im Bypasskanal derart mechanisch gekoppelt sind, daß eine Vergrößerung des Luftstromes durch die Lufteintrittsöffnung eine Verringerung des Luftstromes durch den Bypass zur Folge hat und umgekehrt. Um die Strömungsgeschwindigkeiten im Verlauf des Weges durch die Anlage möglichst konstant zu halten und nicht von den jeweiligen Luftstromanteilen von Warmluft und Kaltluft abhängig zu machen, ist es vorteilhaft, daß die Lufteintrittsöffnung, die Luftaustrittsöffnung und der Bypasskanal mindestens annähernd gleiche Querschnitte aufweisen.

Ausführungsbeispiele der Erfindung sind nachstehend anhand der Zeichnung näher erläutert. In der Zeichnung zeigt:
- Fig. 1: eine perspektivische Darstellung einer Klimaanlage,
- Fig. 2: einen Längsschnitt durch die Klimaanlage in Fig. 1,
- Fig. 3: einen Schnitt entlang der Linie III-III in Fig. 2.

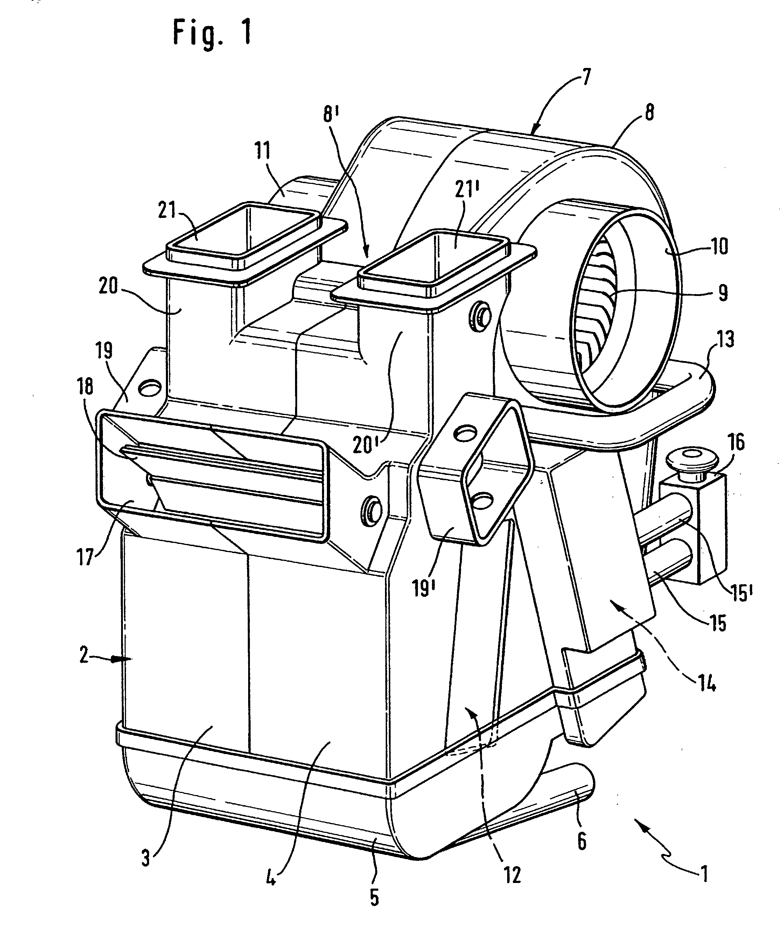

Die Fig. 1 zeigt eine Klimaanlage 1, deren Gehäuse zwei an einer mittleren Fuge aneinanderliegende Gehäuseteile 3 und 4 sowie eine das Gehäuse 2 unten schließende Gehäuseschale 5 umfaßt. An der Gehäuseschale 5 ist ein Ablaufstutzen 6 zum Abführen des in die Gehäuseschale 5 tropfenden Kondensats vorgesehen.

Im oberen Bereich des Gehäuses 2 befindet sich ein Gebläse 7 mit einem in einer Gebläsespirale 8 umlaufenden Radiallaufrad 9, das von einem Antriebsmotor 11 angetrieben wird. Auf der dem Antriebsmotor 11 gegenüberliegenden Seite der Gebläsespirale 8 ist ein Ansaugstutzen 10 für Frischluft oder aus dem Fahrzeuginnenraum abgezogene Umluft angeordnet. Unterhalb des Gebläses 7 ist in dem Gehäuse 2 zwischen den Gehäuseteilen 3 und 4 ein Heizungswärmetauscher 12 angeordnet, zu dem das Heizmedium durch Anschlußrohre 13 geführt wird. Dem Heizungswärmetauscher 12 benachbart ist unterhalb des Gebläses 7 ein Verdampfer 14 einer Kompressions-Kälteanlage angeordnet, der mittels Kältemittelanschlußrohren 15, 15' an ein Expansionsventil 16 angeschlossen ist.

An dem Gehäuse 2 ist ein Ausgangsstutzen 17 vorgesehen, an den ein Luftführungskanal, der die Luft zu im Armaturenbrett des Kraftfahrzeugs befindlichen Ausströmern führt, anschließbar ist. Dieser Ausgangsstutzen 17 ist mittels einer drehbar gelagerten Klappe 18 verschließbar. Seitlich des Ausgangsstutzens 17 sind jeweils Ausgangsstutzen 19, 19' angeordnet, an die Luftführungskanäle zu den Fußraumdüsen anschließbar sind. Oberhalb der Ausgangsstutzen 17, 19, 19' erstrecken sich in den Gehäuseteilen 3 und 4 jeweils ein Luftkanal 20, 20', die seitlich neben einem Abschnitt 8' der Gebläsespirale 8 verlaufen. An den oberen Enden der Luftkanäle 20, 20' sind Ausgangsstutzen 21, 21' angeordnet, an die Luftführungskanäle, die zu Defrosterdüsen unterhalb der Windschutzscheibe des Kraftfahrzeugs führen, anschließbar sind.

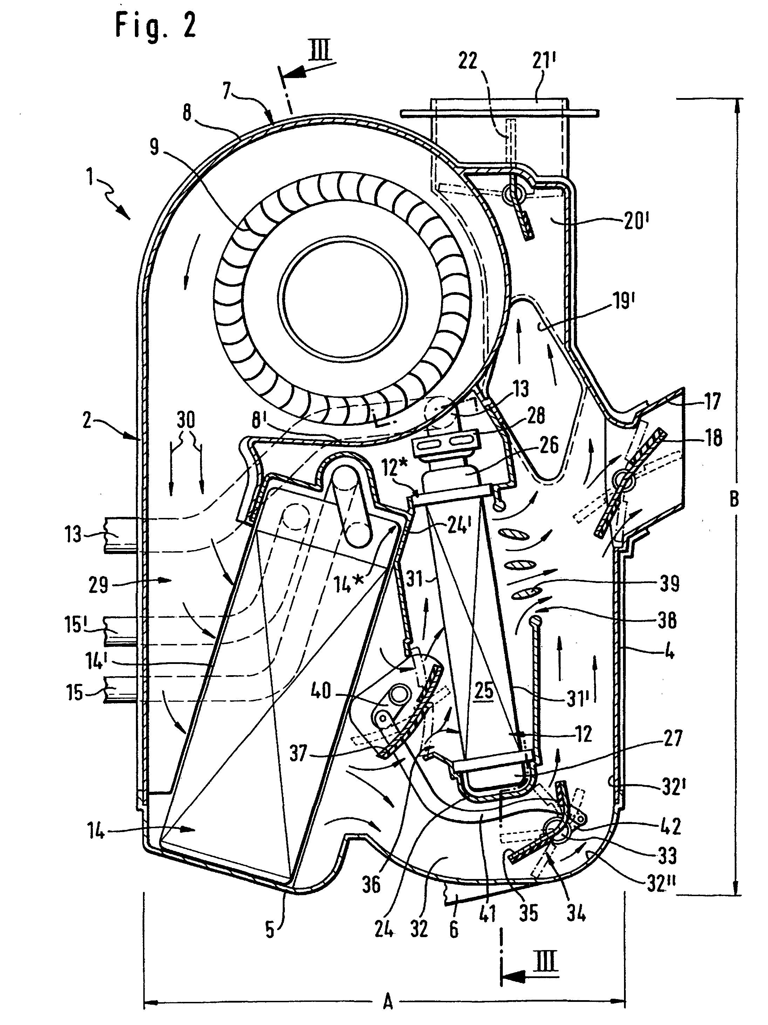

Bei dem in Fig. 2 gezeigten Längsschnitt durch die Klimaanlage 1 ist in einem oberen Teil des Gehäuses 2 das Gebläse 7 mit einem Radiallaufrad 9 angeordnet. Dieser obere Teil des Gehäuses 2 ist als Gebläsespirale 8 gestaltet, die einstückig mit dem Gehäuse 2 ausgeführt ist. Der untere Teil des Gehäuses 2 wird durch eine Gehäuseschale 5 gebildet. In dem Gehäuse 2 ist unterhalb des Gebläses 7 ein Raum 29 gebildet, in den der von dem Gebläse 7 erzeugte Luftstrom eintritt, wobei der aus der Gebläsespirale 8 austretende Luftstrom mit Richtungspfeilen 30 angegeben ist. In dem Raum 29 befindet sich der Verdampfer 14, an den die Kältemittelleitungen 15 und 15' angeschlossen sind.

Innerhalb des Gehäuses 2 befindet sich ein Innengehäuse 24, das von dem Anfangsabschnitt 8' der Gebläsespirale 8 ausgehend sich in Richtung auf die untere Schale 5 des Gehäuses 2 erstreckt. In dem Innengehäuse 24 ist der Heizungswärmetauscher 12 angeordnet, der ein Wärmetauschernetz 25 sowie einen oberen Wasserkasten 25 und einen unteren Wasserkasten 27 umfaßt. Mit dem oberen Wasserkasten 26 liegt der Heizungswärmetauscher 12 in unmittelbarer Nähe des Spiralgehäuses 8 bzw. von dessen Anfangsabschnitt 8'. An dem oberen Wasserkasten 26 befinden sich Aufnahmestutzen 28 zur Aufnahme und Befestigung der Anschlußrohre 13, durch die das Heizmedium dem Heizungswärmetauscher 12 zugeleitet wird.

Der in Luftströmungsrichtung vor dem Heizungswärmetauscher 12 liegende Verdampfer 14 ist mit seiner Stirnseite 14' zur Richtung der aus der Gebläsespirale 8 austretenden Luft 30 in einem Winkel von etwa 15° bis 20° angeordnet, wobei das obere Ende des Verdampfers 14 gegen den Heizungswärmetauscher 12 geneigt ist und an dem Innengehäuse 24 anliegt. Aufgrund einer entsprechenden Gestaltung des oberen Bereichs 24' des Innengehäuses 24 liegen die oberen Enden 14* und 12* der Wärmetauscher (Verdampfer 14 und Heizungswärmetauscher 12) lediglich durch die Wandstärke eines Wandungsabschnitts 24' des Innengehäuses 24 distanziert aneinander. Gemäß der Einbaulage des Heizungswärmetauschers 12 ist die vordere Stirnfläche 31 des Wärmetauschernetzes 25 unter einem Winkel von ca. 7° zur Richtung des aus der Gebläsespirale 8 austretenden Luftstromes 30 verlaufend angeordnet. Der Verdampfer 14 und der Heizungswärmetauscher 12 sind somit V-förmig zueinander angeordnet, wobei die Stirnflächen 14 und 31 einen Winkel von ca. 20° bis 30° einschließen; im dargestellten Ausführungsbeispiel beträgt der Winkel 23°.

Zwischen dem Innengehäuse 24 und der unteren Gehäuseschale 5 sowie dem Gehäuseteil 4 ist ein Bypasskanal 32 gebildet, wobei die Wandung des Innengehäuses 24 und die Wandung des Gehäuseteils 4 bzw. der Gehäuseschale 5 mindestens annähernd parallel zueinander verlaufen. Der Bypass 32 verläuft zunächst unterhalb des unteren Wasserkastens 27 des Heizungswärmetauschers 12 hindurch und geht dann in einen Bogen 32'' über, an den sich schließlich ein Abschnitt 32' anschließt, der annähernd parallel zur austrittsseitigen Stirnfläche 31' des Heizungswärmetauschers 12 verläuft.

In dem Bogen 32'' des Bypasskanals 32 ist eine um eine Schwenkachse 33 drehbare Luftstromsteuerklappe 34 angeordnet, deren Klappenkörper 35 um die Schwenkachse 33 gewölbt ausgebildet ist. Mittels der Luftstromsteuerklappe 34 kann der Anteil der aus dem Verdampfer 12 kommenden Kaltluft, die durch den Bypasskanal 32 strömt, eingestellt oder der Bypasskanal vollständig geschlossen werden. In der anderen Endlage der Luftstromsteuerklappe 34 ist der Bypasskanal 32 vollständig geöffnet, wobei der Klappenkörper 35 eine Stellung einnimmt, bei der dessen Kontur parallel zu den Wandteilen des Bogens 32'' verläuft. Durch diese Maßnahme kann die Luftströmung durch den Bypasskanal 32 günstig beeinflußt werden.

In dem unteren und somit dem Gebläse 7 entfernt gelegenen Bereich weist das Innengehäuse 24 auf der dem Verdampfer 14 zugewandten Seite eine Lufteintrittsöffnung 36 auf, die mittels einer schwenkbar gelagerten Luftstromsteuerklappe 37 verschließbar ist. Auf der anderen Seite des Heizungswärmetauschers 12 ist in dem Innengehäuse 24 eine Luftaustrittsöffnung 38 vorgesehen, die bezogen auf den Heizungswärmetauscher 12 diagonal zur Lufteintrittsöffnung 36 angeordnet ist. Durch diese versetzte Anordnung der Lufteintrittsöffnung 36 und der Luftaustrittsöffnung 38 erfolgt eine weitestgehend gleichmäßige Beaufschlagung des Wärmetauschernetzes 25 über seine Stirnfläche 31, so daß ein gleichmäßiges Temperaturprofil erreicht wird. In der Luftaustrittsöffnung 38 sind Luftleitelemente 39 angeordnet, die im wesentlichen quer zum Abschnitt 32' des Bypasskanals 32 ausgerichtet sind. Durch diese Leitelemente 39 wird erreicht, daß der den Heizungswärmetauscher 12 verlassende Warmluftstrom im wesentlichen quer auf den durch den Abschnitt 32' geführten Kaltluftstrom trifft und dadurch eine intensive Vermischung erfolgt.

An der Luftstromsteuerklappe 37 ist ein Hebel 40 befestigt, an dem ein - in der Zeichnung nicht dargestelltes - Gestänge oder ein Bowdenzug zur Betätigung der Klappe angelenkt ist. Dieser Hebel 40 ist über ein Gestänge 41 mit einem Hebel 42 der Klappe 34 verbunden, so daß beide Klappen 37 und 34 gleichzeitig betätigt werden. Dabei ist die Funktion der Klappen 37 und 34 derart, daß bei einer Bewegung der Luftstromsteuerklappe 37 im Sinne eines Schließens der Lufteintrittsöffnung 36 eine gegenteilige Bewegung der Luftstromsteuerklappe 34, nämlich im Sinne eines Öffnens des Bypasskanals 32 erfolgt und umgekehrt.

In der Wand des Gehäuses 2 bzw. Gehäuseteils 4 ist der Ausgangsstutzen 17 vorgesehen, in dem die schwenkbar gelagerte Klappe 18 angeordnet ist. An diesen Ausgangsstutzen 17 wird ein zu Ausströmdüsen im Armaturenbrett führender Luftkanal angeschlossen. Wie aus Fig. 2 deutlich wird, befindet sich der Ausgangsstutzen 17 schräg gegenüber der Luftaustrittsöffnung 38 des Innengehäuses 24. In Verlängerung des Abschnitts 32' des Bypasskanals 32 schließen sich die Luftkanäle 20' an, wobei aus der Darstellung in Fig. 1 lediglich einer der Luftkanäle 20' zu sehen ist. Am Beginn dieses Luftkanals 20' ist der rechtwinklig von diesem fortführende Ausgangsstutzen 19' vorgesehen, an dem ein Luftführungskanal für die Fußraumdüsen anschließbar ist. Der Luftkanal 20' erstreckt sich entlang des Abschnitts 8' der Gebläsespirale 8, wobei der Luftkanal 20' an seinem oberen Ende als Ausgangsstutzen 21' ausgebildet ist. Dieser Ausgangsstutzen 21' dient zum Anschluß eines Luftführungskanals, der zu Defrosterdüsen unterhalb der Windschutzscheibe führt und verläuft etwa bündig mit der in dieser Richtung des Gehäuses 2 äußersten Erstreckung der Gebläsespirale 8. Vor dem Ausgangsstutzen 21' ist in dem Luftkanal 20' eine Absperrklappe 22 angeordnet.

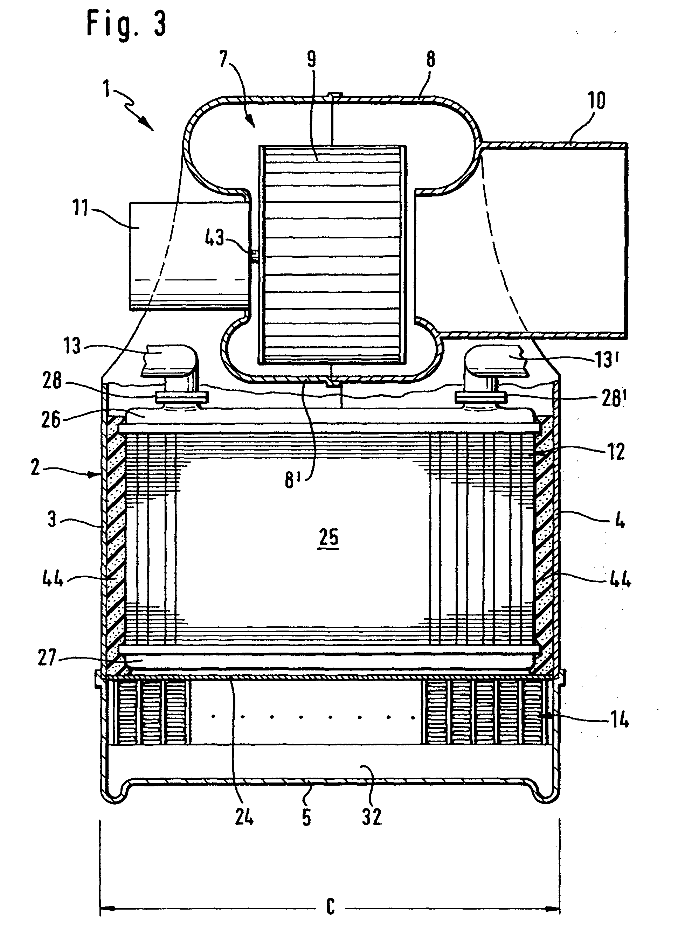

Die Fig. 3 zeigt einen Schnitt entlang der Linie III-III in Fig. 2. Aus dieser Darstellung wird deutlich, daß der Anfangsbereich 8' der Gebläsespirale 8 zwischen den Aufnahmestutzen 28, 28' am oberen Wasserkasten 26 des Heizungswärmetauschers 12 sowie zwischen den Anschlußrohren 13 und 13' liegt. Die diffusorartige Kontur der Gebläsespirale 8 reicht bis zum Beginn der geraden und parallel verlaufenden Wandteile des Gehäuses 2 bzw. der Gehäuseteile 3 und 4, das an seinem unteren Ende mittels der Gehäuseschale 5 geschlossen ist. Die seitlichen Ränder des Wärmetauschernetzes 25 sind zur Vermeidung von neben dem Wärmetauschernetz vorbeiströmender Falschluft mittels einer Dichtung 44 gegen die Wandung der Gehäuseteile 3, 4 abgedichtet. Mit dem unteren Wasserkasten 27 liegt der Heizungswärmetauscher 12 auf dem Innengehäuse 24 dichtend auf. Zwischen der Wandung des Innengehäuses 24 und der unteren Gehäuseschale 5 des Gehäuses 2 wird der Bypasskanal 32 gebildet, durch den ein Abschnitt des Verdampfers 14 sichtbar ist. In der Gebläsespirale 8 befindet sich das Radiallaufrad 9, das auf einer Welle 43 des Antriebsmotors 11 befestigt ist. An dem dem Antriebsmotor 11 gegenüberliegenden stirnseitigen Ende des Spiralgehäuses 8 ist der Ansaugstutzen 10 angeformt, durch den Frischluft oder auch aus dem Fahrzeuginnenraum abgezogene Umluft angesaugt wird.

Die in den Ausführungsbeispielen der Fig. 1 bis 3 gezeigte Klimaanlage umfaßt einen luftseitig gesteuerten Heizungswärmetauscher 12. Es ist jedoch auf einfache Weise möglich, anstelle der Luftstromsteuerklappe 37 oder auch zusätzlich zu dieser ein Wasserventil an dem Anschlußrohr 13 vorzusehen, durch das der Durchfluß des Heizmediums durch den Heizungswärmetauscher 12 steuerbar ist. Durch die Erfindung wird eine Klimaanlage geschaffen, die auch dann einsetzbar ist, wenn lediglich geringer Bauraum zur Verfügung steht. So können beispielsweise die entsprechenden Maße für die in den Fig. 2 und 3 angegebenen Erstreckungen A, B, C beispielsweise
A ≤ 220 mm
B ≤ 400 mm
C ≤ 235 mm betragen.

## Patentansprüche

1. Klimaanlage für ein Kraftfahrzeug mit in einem Gehäuse (2) angeordneten Gebläse (7), einem Verdampfer (14) einer Kälteanlage und einem Heizungswärmetauscher (12), wobei das Gebläse (7) mindestens ein in einer Gebläsespirale (8) umlaufendes Radiallaufrad (9) umfaßt und der Verdampfer (14) sowie der Heizungswärmetauscher (12) im Luftstrom dem Gebläse (7) nachgeordnet sind und mit mehreren stromab des Heizungswärmetauschers (12) an dem Gehäuse (2) angeordneten Ausgangstutzen (17, 19, 19', 21, 21') für die einem Fahrzeuginnenraum zuzuführende Luft, **dadurch gekennzeichnet,**
**daß** der Heizungswärmetauscher (12) und der Verdampfer (14) in dem Gehäuse (2) derart V-förmig zueinander angeordnet sind, daß diese mit jeweils einem ihrer Enden (12* und 14*) dicht beieinanderliegen und daß die Seiten von Verdampfer (14) und Heizungswärmetauscher (12) mit den beieinanderliegenden Enden (12*, 14*) nahe einem Anfangsabschnitt (8') der Gebläsespirale (8) angeordnet und zu diesem hin gerichtet sind.

2. Klimaanlage nach Anspruch 1, **dadurch gekennzeichnet,**
**daß** der Verdampfer (14) eine vom Luftstrom beaufschlagte Stirnfläche (14') aufweist, die bezogen auf die Richtung des aus der Gebläsespirale (8) austretenden Luftstromes (20) unter einem Winkel von ca. 15° bis 20° verläuft.

3. Klimaanlage nach Anspruch 2, **dadurch gekennzeichnet,**
**daß** der Heizungswärmetauscher (12) eine Stirnfläche (31) aufweist, die zu der Stirnfläche (14') des Verdampfers (14) in einem Winkel von ca. 20° bis 30°, vorzugsweise 23° verläuft.

4. Klimaanlage nach einem der Ansprüche 1 bis 3, **dadurch gekennzeichnet,**
**daß** auf der dem Gebläse (7) entlegenen Seite des Heizungswärmetauschers (12) ein mittels einer Luftstromsteuerklappe (34) verschließbarer Bypasskanal (32) gebildet ist, wobei vorzugsweise ein Innengehäuse (24) mit mindestens einer Lufteintrittsöffnung (36) und mindestens einer Luftaustrittsöffnung (38) vorgesehen und in dem Innengehäuse (24) der Heizungswärmetauscher (12) angeordnet ist und zwischen den beieinanderliegenden Enden (12*) und (14*) ein Wandungsabschnitt (24') des Innengehäuses (24) verläuft.

5. Klimaanlage nach Anspruch 4, **dadurch gekennzeichnet,**
**daß** der Bypasskanal (32) zwischen der Innenwandung des Gehäuses (2) und der Außenwandung des Innengehäuses (24) gebildet ist und zumindest ein Abschnitt (32') des Bypasskanals (32) annähernd parallel zur Stirnfläche (31, 31') des Heizungswärmetauschers (12) verläuft und vorzugsweise vor dem parallel verlaufenden Abschnitt (32') des Bypasskanals (32) ein Bogen (32'') von etwa 90° vorgesehen ist.

6. Klimaanlage nach Anspruch 5, **dadurch gekennzeichnet,**
**daß** die Luftstromsteuerklappe (34) in dem Bogen (32'') angeordnet ist, und der Klappenkörper (35) um seine Schwenkachse (33) gewölbt ausgebildet ist.

7. Klimaanlage nach einem der Ansprüche 4 bis 6, **dadurch gekennzeichnet,**
**daß** im Bereich der Lufteintrittsöffrung (36) eine schwenkbar gelagerte Luftstromsteuerklappe (37) vorgesehen ist, mittels der die Lufteintrittsöffnung (36) verschließbar ist.

8. Klimaanlage nach einem der vorhergehenden Ansprüche, **dadurch gekennzeichnet,**
**daß** das Gehäuse (2) zwei an einer mittleren Fuge aneinanderliegende Gehäuseteile (3, 4), zwischen denen das Radialgebläserad (9), der Verdampfer (14) und Heizungswärmetauscher (12) angeordnet sind, und einen sich unterhalb des Verdampfers (14) erstreckende Gehäuseschale (5) umfaßt.

9. Klimaanlage nach einem der vorhergehenden Ansprüche, **dadurch gekennzeichnet,**
**daß** ein Abschnitt (8') der Gebläsespirale (8) zwischen Anschlußrohren (13, 13') des Heizungswärmetauschers (12) angeordnet ist.

10. Klimaanlage nach Anspruch 9, **dadurch gekennzeichnet,**
**daß** der Heizungswärmetauscher (12) an seiner in unmittelbarer Nähe der Gebläsespirale (8') liegenden Seite einen Wasserkasten (26) aufweist, der mit seitlich des Abschnitts (8') der Gebläsespirale (8) befindlichen Aufnahmestutzen (28, 28') für die Anschlußrohre (13, 13') versehen ist.

11. Klimaanlage nach einem der vorhergehenden Ansprüche, **dadurch gekennzeichnet,**
**daß** ein Abschnitt (8') der Gebläsespirale (8) zwischen zu Ausgangsstutzen (21, 21') führenden Luftkanälen (20, 20') des Gehäuses (2) angeordnet ist, wobei die Luftkanäle (20, 20') sich mindestens annähernd in derselben Richtung erstrecken wie der Abschnitt (32') des Bypasskanals (32).

12. Klimaanlage nach Anspruch 11, **dadurch gekennzeichnet,**
**daß** die Ausgangsstutzen (21, 21') an den Luftkanälen (20, 20') für die Defrostung der Windschutzscheibe vorgesehen und mittels Klappen (22) verschließbar sind.

13. Klimaanlage nach einem der Ansprüche 4 bis 7, **dadurch gekennzeichnet,**
**daß** die Lufteintrittsöffnung (36) in einem dem Gebläse (7) entfernt liegenden Bereich des Innengehäuses (24) und die Luftaustrittsöffnung (38) bezogen auf die Durchströmungsrichtung der Luft durch den Heizungswärmetauscher (12) diagonal versetzt zur Lufteintrittsöffnung (36) angeordnet sind.

14. Klimaanlage nach einem der Ansprüche 4 bis 7 oder 17, **dadurch gekennzeichnet, daß** in der Luftaustrittsöffnung (38) Luftleitelemente (39) vorgesehen sind, durch welche die Luft aus dem Innengehäuse (24) im wesentlichen quer zur Luftströmungsrichtung im Abschnitt (32') des Bypasskanals (32) austritt.

15. Klimaanlage nach Anspruch 7, **dadurch gekennzeichnet,**
**daß** die Luftstromsteuerklappe (37) in der Lufteintrittsöffnung (36) und die Luftstromsteuerklappe (34) im Bypasskanal (32) derart mechanisch gekoppelt sind, daß eine Vergrößerung des Luftstromes durch die Lufteintrittsöffnung (36) eine Verringerung des Luftstromes durch den Bypass (32) zur Folge hat und umgekehrt.

16. Klimaanlage nach Anspruch 4, **dadurch gekennzeichnet,**
**daß** die Lufteintrittsöffnung (36), die Luftaustrittsöffnung (38) und der Bypasskanal (32) mindestens annähernd gleiche Querschnitte aufweisen.

## Claims

1. Air conditioning system for a motor vehicle comprising a blower (7) located in a housing (2), an evaporator (14), a cooling system and a heater heat exchanger (12), the blower (7) incorporating at least one radial impeller (9) running in a blower volute (8) and the evaporator (14) and the heat exchanger (12) being arranged downstream of the blower (7) in terms of airflow, and further comprising a plurality of discharge connections (17, 19, 19', 21, 21') arranged on the housing (2) downstream of the heat exchanger (12) for the air to be fed to the interior of the vehicle, **characterised in that**
the heat exchanger (12) and the evaporator (14) are so arranged in the housing (2) to form a V relative to one another that they rest closely together at one of their respective ends (12* and 14*) and **in that** the sides of the evaporator (14) and the heat exchanger (12) with the ends (12*, 14*) resting closely together are located in the vicinity of an initial section (8') of the blower volute (8) and are orientated towards this.

2. Air conditioning system according to claim 1, **characterised in that**
the evaporator (14) has a frontal surface (14') on which the airflow acts and which runs at an angle of approximately 15 to 20 degrees with respect to the. direction of the airflow (20) discharged from the blower volute (8).

3. Air conditioning system according to claim 2, **characterised. in that**
the heater heat exchanger (12) has a frontal surface (31) which runs at an angle of approximately 20 to 30 degrees, preferably 23 degrees, with respect to the frontal surface (14') of the evaporator (14).

4. Air conditioning system according to any of claims 1 to 3, **characterised in that** a bypass duct (32) closable by means of an airflow control flap (34) is formed on that side of the heater heat exchanger (12) which is remote from the blower (7), an inner housing (32) with at least one air inlet opening (36) and at least one air outlet opening (38) being preferably provided and the heater heat exchanger (12) being located in the inner housing (24) and a wall section (24') of the inner housing (24) running between the ends (12*) and (14*) resting closely together.

5. Air conditioning system according to claim 4, **characterised in that**
the bypass duct (32) is formed between the inner wall of the housing (2) and the outer wall of the inner housing (24), and **in that** at least one section (32') of the bypass duct (32) runs approximately parallel to the frontal surface (31,31') of the heater heat exchanger (12), a bend (32") of approximately 90 degrees being preferably provided upstream of said parallel section (32') of the bypass duct (32).

6. Air conditioning system according to claim 5, **characterised in that**
the airflow control flap (34) is located in the bend (32") and **in that** the flap body (35) is designed so as to be curved around its pivot axis (33).

7. Air conditioning system according to any of claims 4 to 6, **characterised in that** a pivotably mounted airflow control flap (37) is provided in the region of the air inlet opening (36) for closing the air inlet opening (36).

8. Air conditioning system according to any of the preceding claims, **characterised in that**
the housing (2) comprises two housing parts (3,4) fitting against one another along a central joint, between which the radial impeller (9), the evaporator (14) and the heater heat exchanger (12) are arranged, and that it further comprises a housing shell (5) extending beneath the evaporator (14).

9. Air conditioning system according to any of the preceding claims, **characterised in that**
a section (8') of the blower volute (8) is located between connecting tubes (13, 13') of the heater heat exchanger (12).

10. Air conditioning system according to claim 9, **characterised in that**,
on its side located in the immediate vicinity of the blower volute (8'), the heater heat exchanger (12) comprises a water tank (26) provided with mounting connections (28, 28') for the connecting tubes (13, 13'); which connections are located to the side of the section (8') of the blower volute (8).

11. Air conditioning system according to any of the preceding claims, **characterised in that**
a section (8') of the blower volute (8) is located between air ducts (20, 20') of the housing (2) which lead to discharge connections (21, 21'), the air ducts (20, 20') extending at least approximately in the same direction as the section (32') of the bypass duct (32).

12. Air conditioning system according to claim 11, **characterised in that**
the discharge connections (21,21') on the air ducts (20, 20') are provided for defrosting the windscreen and closable by means of flaps (22).

13. Air conditioning system according to any of claims 4 to 7, **characterised in that** the air inlet opening (36) is located in a region of the inner housing (24) which is remote from the blower (7), and **in that** the air outlet opening (38) is located diagonally offset with respect to the air inlet opening (36) in terms of the direction of airflow through the heater heat exchanger (12).

14. Air conditioning system according to any of claims 4 to 7 or claim 17, **characterised in that**
air baffle elements (39) are provided in the air outlet opening (38) to cause the air to be discharged from the inner housing (24) essentially transversely with respect to the direction of airflow in the section (32') of the bypass duct (32).

15. Air conditioning system according to claim 7, **characterised in that**
the airflow control flap (37) in the air inlet opening (36) and the airflow control flap (34) in the bypass duct (32) are so coupled mechanically that an increase in the airflow through the air inlet opening (36) results in a reduction of the airflow through the bypass (32) and vice versa.

16. Air conditioning system according to claim 4, **characterised in that**
the air inlet opening (36), the air outlet opening (38) and the bypass duct (32) have at least approximately equal cross-sections.

## Revendications

1. Climatisation pour un véhicule automobile, comprenant une soufflante (7) disposée dans un carter (2), un évaporateur (14). d'un système de réfrigération et un échangeur de chaleur (12) pour le chauffage, où la soufflante (7) comprend au moins une roue radiale (9) en rotation dans une spirale (8) de la soufflante, et l'évaporateur (14) ainsi que l'échangeur de chaleur (12) pour le chauffage sont disposés en aval de la soufflante (7), dans le flux d'air, et comprenant plusieurs tubulures de sortie (17, 19, 19', 21, 21') disposées sur le carter (2), en aval de l'échangeur de chaleur (12) pour le chauffage, ces tubulures de sortie étant prévues pour l'air à acheminer dans l'habitacle d'un véhicule, **caractérisée**
**en ce que** l'échangeur de chaleur (12) pour le chauffage. et l'évaporateur (14) sont disposés dans le carter (2) en formant un V, l'un par rapport à l'autre, de manière telle que ces équipements soient placés tout près l'un de l'autre, respectivement par une de leurs extrémités (12* et 14*), et
**en ce que** les côtés de l'évaporateur (14) et de l'échangeur de chaleur (12) pour le chauffage, par leurs extrémités (12*, 14*) placées l'une à côté de l'autre, sont disposésà proximité d'une partie initiale (8') de la spirale (8) de la soufflante et orientés en direction de cette partie initiale.

2. Climatisation selon la revendication 1, **caractérisée en ce que** l'évaporateur (14) comprend une surface frontale (14') sollicitée par le flux d'air, laquelle surface frontale s'étend en formant un angle compris entre environ 15° et 20°, par rapport à la direction du flux d'air (20) sortant de la spirale (8) de la soufflante.

3. Climatisation selon la revendication 2, **caractérisée en ce que** l'échangeur de chaleur (12) pour le chauffage comprend une surface frontale (31) qui s'étend, par rapport à la surface frontale (14') de l'évaporateur (14), suivant un angle compris entre environ 20° et 30°, de préférence de 23°.

4. Climatisation selon l'une des revendications 1 à 3, **caractérisée en ce qu'**un conduit de dérivation (32), pouvant être obturé au moyen d'un volet de commande de flux d'air (34), est formé sur le côté - éloigné de la soufflante (7) - de l'échangeur de chaleur (12) pour le chauffage, où il est prévu, de préférence, un carter intérieur (24) comprenant au moins une ouverture d'entrée d'air (36) et au moins une ouverture de sortie d'air (38), et l'échangeur de chaleur (12) pour le chauffage est disposé dans le carter intérieur (24), et une partie de paroi (24') du carter intérieur (24) s'étend entre les extrémités (12*) et (14*) se trouvant l'une à côté de l'autre.

5. Climatisation selon la revendication 4, **caractérisée en ce que** le conduit de dérivation (32) est formé entre la paroi intérieure du carter (2) et la paroi extérieure du carter intérieur (24) et au moins une partie (32') du conduit de dérivation (32) s'étend de façon presque parallèle à la surface frontale (31, 31') de l'échangeur de chaleur (12) pour le chauffage, et, de préférence en amont de la partie (32') du conduit de dérivation s'étendant de façon parallèle, il est prévu une courbure (32'') environ de 90°.

6. Climatisation selon la revendication 5, **caractérisée en ce que** le volet de commande de flux d'air (34) est disposé dans la courbure (32'') et le corps (35) du volet est configuré de façon incurvée autour de son axe de pivotement (33).

7. Climatisation selon l'une des revendications 4 à 6, **caractérisée en ce que**, dans la zone de l'ouverture d'entrée d'air (36), il est prévu un volet de commande de flux d'air (37), logé de façon pivotante, au moyen duquel l'ouverture d'entrée d'air (36) peut être obturée.

8. Climatisation selon l'une des revendications précédentes, **caractérisée en ce que** le carter (2) comprend deux parties (3, 4) de carter, contiguës entre elles au niveau d'un joint central et entre lesquelles sont disposés la roue radiale (9) de la soufflante, l'évaporateur (14) et l'échangeur de chaleur (12) pour le chauffage, et une coque de carter (5) s'étendant au-dessous de l'évaporateur (14).

9. Climatisation selon l'une des revendications précédentes, **caractérisée en ce qu'**une partie (8') de la spirale (8) de la soufflante est disposée entre des tuyaux. de raccordement (13, 13') de l'échangeur de chaleur (12) pour le chauffage.

10. Climatisation selon la revendication 9, **caractérisée en ce que** l'échangeur de chaleur (12) pour le chauffage comprend, sur son côté se trouvant à proximité immédiate de la spirale (8') de la soufflante, un diffuseur d'air (26) qui est doté de tubulures de logement (28, 28') pour les tuyaux. de raccordement (13, 13'), lesquelles tubulures de logement sont placées latéralement par rapport à la partie (8') de la spirale (8) de la soufflante.

11. Climatisation selon l'une des revendications précédentes, **caractérisée en ce qu'**une partie (8') de la spirale (8) de la soufflante est disposée entre des conduits d'air (20, 20') du carter (2), conduisant aux tubulures de sortie (21, 21'), où les conduits d'air (20, 20') s'étendent au moins presque dans la même direction que la partie (32') du conduit de dérivation (32).

12. Climatisation selon la revendication 11, **caractérisée en ce que** les tubulures de sortie (21, 21') placées sur les conduits d'air (20, 20') sont prévues pour le dégivrage du pare-brise et peuvent être obturées au moyen de volets (22).

13. Climatisation selon l'une des revendications 4 à 7, **caractérisée en ce que** l'ouverture d'entrée d'air (36) est disposée dans une zone du carter intérieur (24), éloignée de la soufflante (7), l'ouverture de sortie d'air (38) étant disposée de façon décalée en diagonale par rapport à l'ouverture d'entrée d'air (36), en référence à la direction de l'air traversant l'échangeur de chaleur (12) pour le chauffage.

14. Climatisation selon l'une des revendications 4 à 7 ou 13, **caractérisée en ce qu'**il est prévu, dans l'ouverture de sortie d'air (38), des éléments de guidage d'air (39) par lesquels l'air sort du carter intérieur (24), pratiquement de façon transversale par rapport à la direction de flux d'air dans la partie (32') du conduit de dérivation (32).

15. Climatisation selon la revendication 7, **caractérisée en ce que** le volet de commande de flux d'air (37), placé dans l'ouverture d'entrée d'air (36), et le volet de commande de flux d'air (34), placé dans le conduit de dérivation (32), sont couplés mécaniquement de façon telle, qu'une augmentation du flux d'air à travers l'ouverture d'entrée d'air (36) ait comme conséquence une diminution du flux d'air à travers la dérivation (32), et inversement.

16. Climatisation selon la revendication 4, **caractérisée en ce que** l'ouverture d'entrée d'air (36), l'ouverture de sortie d'air (38) et le conduit de dérivation (32) ont des sections au moins presque identiques.
